# EUROPEAN PATENT SPECIFICATION

(11) **EP 1 287 959 B1**
(45) Date of publication and mention of the grant of the patent: **22.09.2004**
(21) Application number: 02025200.3
(22) Date of filing: 21.12.1995
(51) Int. Cl.: B29C 33/70, B29C 45/80, B29C 45/84

(54) **Mold with an on-board counter**
Formwerkzeug mit eingebautem Zähler
Moule avec compteur intégré

(30) Priority: 30.12.1994 US 367396; 12.09.1995 US 528516
(43) Date of publication of application: 05.03.2003
(62) Divisional of application: 95120311.6
(73) Proprietor: Progressive Components International Corporation, Wauconda, IL 60084 (US)
(72) Inventor: Starkey, Glenn, Lake Zurich, Illinois 60047 (US)
(74) Representative: Manitz, Finsterwald & Partner GbR

(56) References cited:
- EP-A- 0 497 991
- FR-A- 2 473 948
- US-A- 4 010 679
- US-A- 4 279 582
- US-A- 5 057 000
- PATENT ABSTRACTS OF JAPAN vol. 1995, no. 02, 31 March 1995 (1995-03-31) & JP 06 328458 A (TOYO MACH & METAL CO LTD), 29 November 1994 (1994-11-29)
- PATENT ABSTRACTS OF JAPAN vol. 009, no. 215 (M-409), 3 September 1985 (1985-09-03) & JP 60 076229 A (MATSUSHITA DENKO KK), 30 April 1985 (1985-04-30)
- PATENT ABSTRACTS OF JAPAN vol. 016, no. 191 (M-1245), 8 May 1992 (1992-05-08) & JP 04 027513 A (NIKKO KOGYO KK), 30 January 1992 (1992-01-30)
- PATENT ABSTRACTS OF JAPAN vol. 014, no. 110 (M-0943), 28 February 1990 (1990-02-28) & JP 01 313116 A (Y H CONSULTING:KK), 18 December 1989 (1989-12-18)
- PATENT ABSTRACTS OF JAPAN vol. 015, no. 325 (M-1148), 19 August 1991 (1991-08-19) & JP 03 124417 A (SUMITOMO HEAVY IND LTD), 28 May 1991 (1991-05-28)
- PATENT ABSTRACTS OF JAPAN vol. 015, no. 333 (M-1150), 23 August 1991 (1991-08-23) & JP 03 128200 A (AIDA ENG LTD), 31 May 1991 (1991-05-31)
- PATENT ABSTRACTS OF JAPAN vol. 018, no. 585 (M-1700), 9 November 1994 (1994-11-09) & JP 06 218590 A (UCHIHARA SEISAKUSHO:KK), 9 August 1994 (1994-08-09)

## Description

### Field of the Invention

This invention relates to a mold for use in a plastic injection molding press wherein the mold is used to manufacture plastic parts in accordance with the preamble of claim 1(see JP 06 328458 A).

### Background of the Invention

In the past, injection molds were often left in the press and were run for very long part runs; and the mold was seldom removed from the press for storage. Today however, many manufacturers of plastic parts utilize "just-in-time" practices wherein the purchaser does not want an inventory of large quantities of plastic parts, but wants the parts to be made in smaller batches and to be delivered on an "as-needed" basis. In these past systems, the molds were continuously associated with the press so that counters on the press itself could be relied upon to provide the number of cycles of the mold and this was used to provide information relative to preventative maintenance, such as cleaning of the mold or lubricating critical surfaces. Where a number of molds are taken in and out of the press for just-in-time manufacturing to produce different parts on an as-needed basis, the press counters which count the number of cycles, can no longer be relied upon for maintenance schedules because a series of different molds is used in the press for relatively short periods of time. Currently, some records are kept as to when and how long a particular mold has been run, usually such records are kept in a computer log or in a paper maintenance record. Such computer logs or paper records may be used to schedule preventive maintenance of the mold. Sometimes such computer or paper records may not be an accurate or positive means of assuring that the proper maintenance is being scheduled for each of the various molds being used with the same or different molding presses. Obviously, without the proper maintenance of an injection mold, damage may occur and down time may also be the result.

Preventive maintenance of a mold is a much more critical issue today, particularly for just-in-time manufacturing. parts on an as-needed basis. That is, with the advent of new, engineered thermoplastic materials, the molds are often run faster, hotter and must be kept cleaner than they had to be in the past. Therefore, the adequate maintenance for each mold is a much more critical issue today than in the past. Moreover, because molds are regularly changed in and out of presses and may be transported to various manufacturing sites, they are often banged around and subjected to shock stresses not normally encountered when in the press. Thus, it is desirable to provide a reliable count of the cycles a particular mold has undergone with a rugged counter which is able to withstand the hostile physical and chemical conditions to which the mold may be subjected.

### Summary of the Invention

In accordance with the present invention, an injection plastic mold as defined in claim 1 is provided with its own on-board monitor or counter, which is actuated with each opening and closing cycle of the mold to maintain a count of the operating cycles performed. This count is maintained with the mold, whether the mold is on the press or a storage rack. The counter or monitor must be relatively inexpensive and unobtrusive and capable of withstanding harsh temperatures and shock that are encountered in an injection molding environment. The counter or stroke monitor is an electrical counter which is incorporated into a mold half to remain with the mold when it is stored away from a molding machine, when operated during an initial set-up operation, and when operated during a production run. The counter should be hermetically sealed against the intrusion of damaging liquids or chemicals and in a protective housing to protect against shock, etc.

The common computer monitors are hard wired between a computer and the molding machine and count production pieces strokes only for a current run of the mold and use available line current and will not count strokes of the mold during set-up operations. The on-board electrical counters of the present invention are provided with batteries, and they count production and set-up strokes of the mold and maintain a cumulative count over successive runs. By incorporating electrical batteries into the counter, the cycle and other information is retained when the mold is removed from the press and stored on a storage shelf. The preferred electrical monitor includes an actuator which is engageable by another part of the press upon opening and closing the press to provide a count of the number of cycles of the press. Preferably, the electrical monitor also includes a clock to time a molding cycle and a means to provide an average production cycle time for the molder.

It is preferred that the electrical monitor also has the capability of having a date or calendar means so that the date of usage of the mold is also stored in memory. Thus, the mold monitor may be interrogated to provide the dates on which the mold was in production and the production cycles for this usage period so that the history may be readily known particularly, when the mold is replaced in the press in just-in-time manufacturing to produce parts on an as-needed basis.

The monitor also may have a settable counter switch that is set to a predetermined count at which maintenance should be done. When the mold has been cycled through to the previously set count, an alarm or indicator is operated to alert the operator that it is time to perform mold maintenance.

In accordance with another aspect of the invention, the preferred monitor also is programmable to the extent that the mold serial number and/or part name, part number or other identifying factors with respect to a particular part may be acquired from the monitor. With the date and time information, as well as the specific parts being run, there may be provided a history with respect to the number of specific parts made and the date of their manufacture, as well as their average cycle time or other information so as to provide a better history with respect to when maintenance should be made and what type of maintenance should be used.

It is preferred that the mold monitor also have ports so that a readout device may be connected to the ports of the electrical monitor so that the history and average cycle time and/or total cycles as well as any stored maintenance information may be read out from the electrical counter.

Thus, the present invention provides a mold monitor which is attached to a mold and serves as a memory device for the injection mold, which creates accurate data with respect to its usage and allows for timely and proper maintenance. Preferred memory devices also are programmable for specific part identity and have readout devices which provide significant information with respect to the production usage and dates of usage of the mold.

The mold includes a mold body having first and second mold halves for molding a plastic part with the portions being movable from a stored, out-of-the-press position to an operating position in the molding press for movement between open and closed positions. In the closed position, the first and second halves are brought together and define a cavity for molding a plastic part with the part having a part line defined at the juncture of the first and second mold halves. An actuating mechanism is associated with the counter to be engageable with one of the mold halves as they are moved to the closed position. A relatively small protective housing encompassing the counter's housing and internal counting mechanism is provided and is mounted to the other of the mold halves to protect the counter against harsh operating conditions in the mold press.

As is apparent, the mold having the on-board counter as described above is relatively inexpensive as it employs a well-known, off-the-shelf mechanical counter having a conventional counting mechanism. The off-the-shelf counter is converted for use in the hostile injection molding environment by the provision of the above-described protective housing which is mounted to a mold half so that it is carried therewith at all times in and out of the press. Thus, the converted counter is particularly useful where only a count of molding cycles is desired and/or the injection molding operating conditions limit the effectiveness of battery powered devices, such as where high operating temperature ranges are encountered. The converted counter is a rugged and simple, relatively inexpensive device well-adapted for use in injection molds which encounter harsh temperatures and shock.

Preferably, the protective housing includes a housing body having a counter receiving cavity formed therein. An identification plate is removably connectable to the housing body to encase the counter in the cavity, with the plate defining a window so that the window is aligned with the counter display when the plate is connected to the housing body, thereby allowing the display to be viewed through the window when the counter is contained in the protective housing. The identification plate can include indicia to identify the part and the mold. Where the counter assembly described herein is desired to be used with another mold, the identification plate can be removed and replaced with another identification plate which indicates the new mold with which the counter is to be associated and the part formed by that mold.

The protective housing can be formed from a tough, plastic nylon material so as to provide the counter assembly with resistance to harsh temperatures and shock which are typically encountered during injection molding operations.

In one form, the protective housing defines an aperture through which the counter actuating mechanism can extend exteriorly of the housing to engage the one mold half as the mold halves are moved to the closed position.

In one form, the other mold half includes a planar surface which defines the part line and a pocket is formed within the other mold portion with the protective housing received in the pocket flush with the planar surface and the actuating mechanism extending from the planar surface. In this manner, the counter assembly is positioned in the mold to be unobtrusive so as not to interfere with molding operations and not to interfere with moving the mold into and out of mold presses.

Manifestly, the counter assembly of the present invention can be mounted to the mold at a variety of different locations while still being actuated with each mold cycle. So, for instance, in another form of the invention, the other mold half includes a bottom support member or rail and the protective housing is mounted in the bottom support member. To allow the actuating mechanism to extend beyond the part line, a bore is formed in the other mold half extending from the support member to the part line with the actuating mechanism including an elongate rod which extends through the bore between the counter and the part line.

### Brief Description of the Drawings

FIG. 1 is a partial, perspective view of a molding press having a mold with a monitor or counter positioned therein in accordance with the preferred embodiment of the invention;

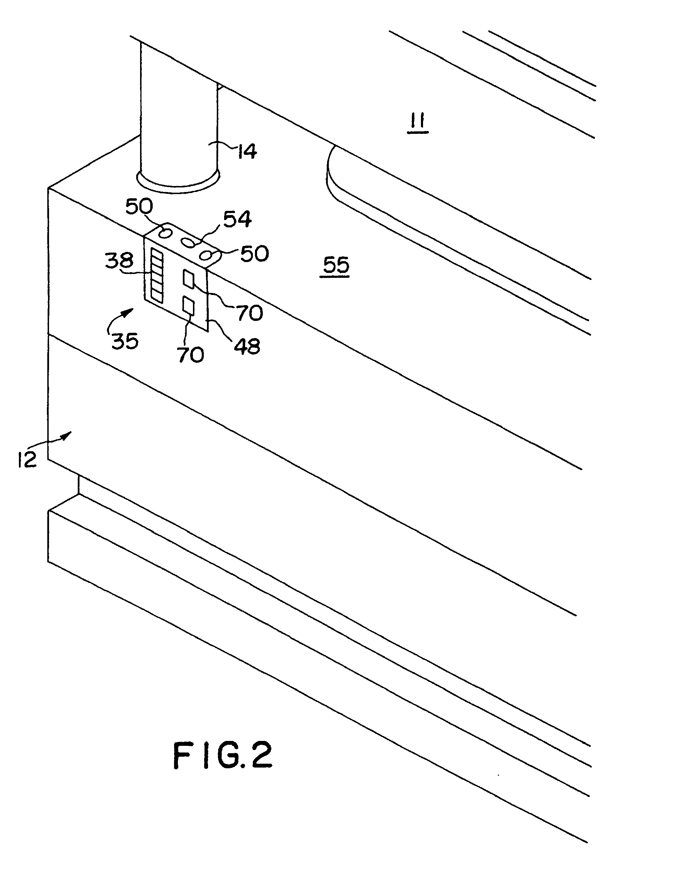

FIG. 2 is an enlarged view of the molding press for molding plastic parts and having a counter/monitor attached to the lower mold half;
FIG. 3 is a top, plan view of the counter/monitor;
FIG. 4 is a side, elevational view of the counter/monitor;
FIG. 5 is a block diagram of the monitor;
FIG. 6 is a side, elevational view of a monitor constructed in accordance with another embodiment of the invention; and
FIG. 7 is a plan view of the monitor illustrated in FIG. 6.

### Detailed Description of the Preferred Embodiment

As shown in the drawings for purposes for illustration, the invention is embodied in a mold 10, which includes an upper mold half 11 and a lower mold half 12. In this instance, the lower mold half 12 is shown in a lowered, open position and is mounted for vertical, reciprocal movement to an upper, closed position on four vertical posts 14 which are stationary or fixably mounted at their upper ends to the upper mold half 11. The lower mold half 12 has post-receiving bores 15 which slide along the respective posts 14 as the lower mold half is raised and lowered to complete a typical molding cycle by a molding press (not shown). The particular mold has an upper sprue or opening 16 through which the hot, molten plastic may be injected into a cavity in the upper mold half as well as a cavity 19 in the lower mold half which mates with the upper mold cavity to form the part 20. The part 20 is typically ejected by an upward movement of an ejector plate 22, which is mounted for vertical movement on four, vertical, small posts 24. The ejector plate 22 is mounted between the upper, horizontal mold block 26 and a lower, horizontal plate 28. A pair of side plates 30 connect the upper mold block 26 to the lower mold plate 28. Manifestly, the mold portions 11 and 12 may come in various sizes and shapes from that illustrated herein.

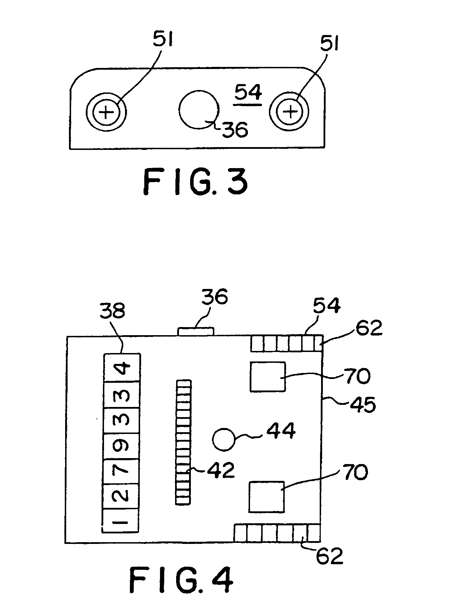

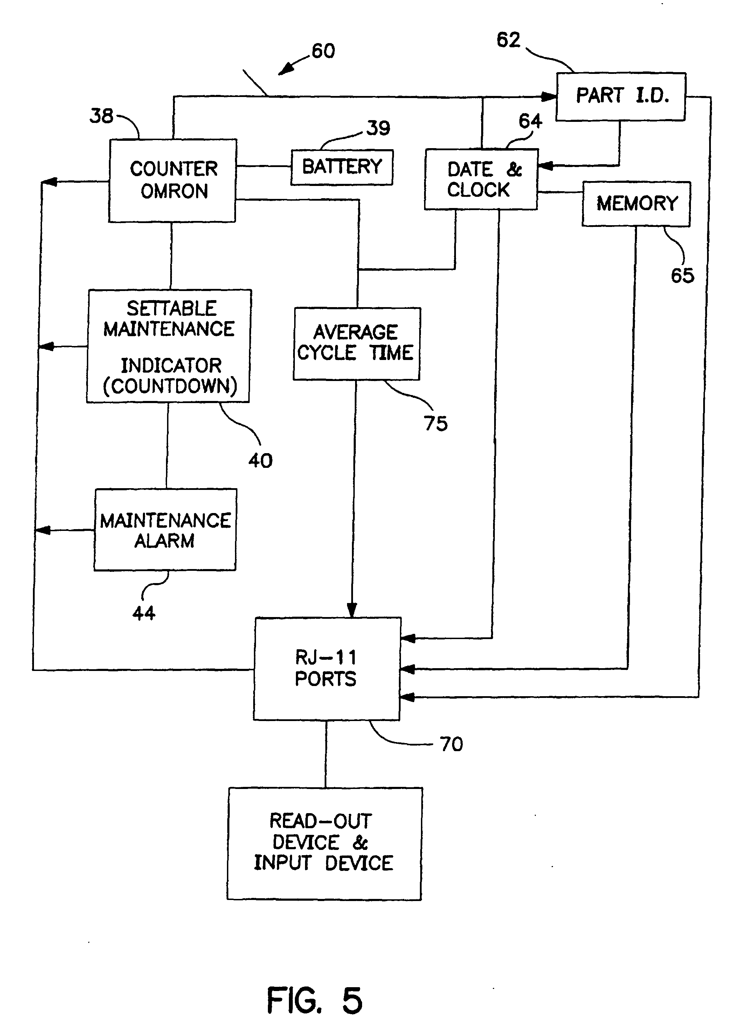

In accordance with the present invention, the mold 10 is provided with its own counter or monitor device 35, which includes an actuator 36 (FIG. 3) to be actuated with each opening and closing movement of the mold when it is in an injection molding press. Associated with the actuator 36 is an electrical cycle counter display 38 which has a battery 39, as shown in FIG. 5. The counter monitor device 35 maintains the cycle count in the counter for a prolonged period of time, whether the mold is in the press or out of the press. The preferred monitor device also includes a maintenance means 40 which may include a series of setting switches 42 which can be set for a predetermined target or time when the maintenance is to be performed. When the count reaches the preferred count, the maintenance means 40 operates a maintenance alarm, which is in the form of a light 44 or audio alarm that is actuated to indicate that the particular mold needs maintenance.

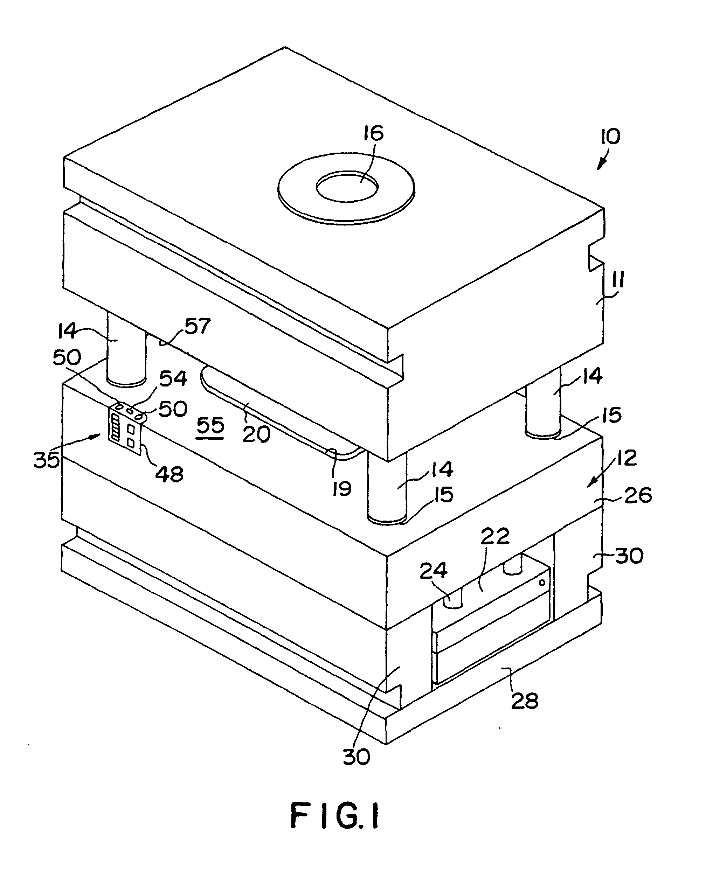

The preferred and illustrated monitor has a block-shaped body having an outer housing 45, which is a tough, closed body or housing for substantially enclosing and protecting the internal electronics and devices, which are shown in FIG. 5. The monitor may be mounted in various manners--that is, attached to the mold in various ways. Since the monitor device is built into the mold, such as shown in FIG. 1, a pocket 48 is provided in the mold block 26 with the body 45 being received in the pocket. A pair of mounting fasteners 50 extend through vertical openings or holes 51 in the housing 45 and are threaded into the mold block 26.

Preferably, the upper top wall 54 of the monitor is substantially flush with the upper surface 55 (FIG. 1) of the mold block 26, with only the actuator 36 projecting above the plane top surface 55 of the mold block 26. As the mold block is raised, the actuator is lifted upwardly to abut the underside 57 of the top mold half 11, which is stationary in this instance,.although it could be movable. The stationary, lower surface 57 then depresses the actuator 36 to close a switch contact 60 (FIG. 5) to cause operation of the monitor device for one cycle. Of course, when the mold opens and lowers the top surface 55 of the lower mold half from the undersurface of the top mold half, the actuator 36 is urged by an internal spring to again project above the top wall 54 of the monitor to be ready to be actuated upon the next closing cycle of the mold. Manifestly, the monitor device could be positioned in the stationary, upper half of the mold to be actuated by the movable, lower half, or alternatively, both the upper and lower mold halves could be movable towards each other. In any event, there is always an entire opening and closing cycle for a mold for making a plastic part (or parts) which is then ejected by the ejector 22.

Referring now to FIG. 5, it is preferred that the monitor device also has a number of other functions such as the part identification input device 62 by which a part identification number or name may be inputted into the monitor and stored therein so that each part being run on the mold may be specifically identified. Further, it is preferred that the monitor device also has a settable date and time clock 64 (FIG. 5) by which the date is kept and the time of day is also kept. The date and clock device are particularly useful for retaining the history of operation of the mold in a memory 65. The memory 65 (shown in FIG. 5) keeps log of the dates when the mold is in usage and also may record in memory the number of cycles of the counter 38 to show how many parts have been made. Particularly where the mold is used for just-in-time production, there may be a series of dates stored in memory and a total count of the number of parts made over these days when the mold was actually in the press and molding parts. Whatever the particular arrangement, the date and clock may be used to provide in memory a history of the particular times of usage of the mold.

It is preferred that there be communication input and output parts here called, RJ11 ports 70, which can be connected to a readout device which preferably is a handheld, readout device that is commercially available. Alternatively, the ports 70 could be connected to a computer which could interrogate the monitor for a complete readout of that which has been stored in memory. The readout device may also be an input device which can input information into the memory with respect to a particular preventive maintenance operation so that the mold has therein a particular history of what maintenance needs to be done so that the readout device can obtain a readout from memory of the preventive maintenance schedule from the memory 65.

In addition, it is preferred that the monitor device, as shown in FIG. 5, has an average cycle time circuit or means 75 by which the cycle times are accumulated and then averaged; so that the average cycle time to make and eject a part can be displayed or read out, such as through the RJ11 ports 70. Alternatively, a separate indicator may be provided on the monitor face to show the average cycle time.

Preferably, the monitor device not only includes a counter, which accumulates the total number of cycles which have occurred, but also includes the maintenance switch means 42 which can be set to a specific number, and when the counter display 38 reaches this specific number set in the maintenance switch means 42, the latter actuates the alarm or indicator 44 to indicate to the press operator that the mold needs to receive preventive maintenance.

By way of example only, a printout by the readout device from the monitor device 35 on the mold may be, as follows:

| | |
|---|---|
| Part Name: | Bezel |
| Part I.D. #: | 5639-4 |
| Mold I.D. #: | 322 |
| Number of Mold Cavities: | 8 |
| History: | |
| 12/4/93 - 3/4/94 | |
| Number of cycles: | 345,604 |
| Average production cycle: | 10.0 seconds |
| | |
| 3/16/94 - 6/1/94 | |
| Number of cycles: | 330,488 |
| Average production cycle: | 11.5 seconds |

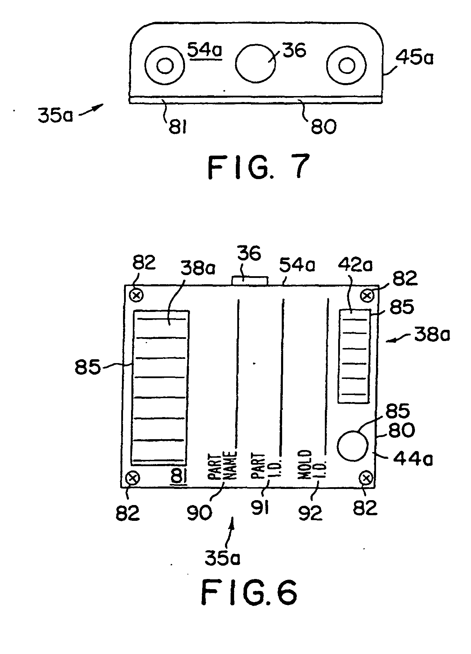

In a further embodiment illustrated in FIGS. 6 and 7, the invention is embodied in a monitor device 35a, which has an actuator 36a projecting upwardly above a top wall 54a of the housing 45a. The monitor device 35a is more simplified and less expensive than the monitor device 35 described in connection with FIG. 5, in that the monitor device 35a lacks any electronic memory and any programmability. Instead, the monitor device 35a has only an electric counter display 38a, a settable, countdown maintenance device or switch 42a, and an indicator 44a operable by the maintenance switch device 42a when the counter has reached the count at which maintenance is to be performed.

The monitor device 38 or 38a may be provided with an attachable identification tag 80 (FIGS. 6 and 7) which can be a plate 81 fastened by screws 82 threaded into threaded holes in the monitor housing 45a. The I.D. plate 81 may have three windows 85 or openings therein that expose the counter display 38a, the maintenance countdown switch 42a, and the indicator light 44a. The I.D. plate 81 may be an inexpensive plate that has thereon the part name at 90, the part identification (I.D.) at 91, and the mold identification (I.D.) at 92. Because the identification tag 80 is removable, the monitor device may be taken from one mold; and a new tag 80 for a new mold may be attached to the monitor device by the screws 82; and the monitor is ready for use with the new mold. Manifestly, other forms of monitors or counters may be constructed from those illustrated herein and fall within the purview of this invention.

The term mold as used herein refers to mold bases or frames sold by mold manufacturers without the final cavity therein, as well as refers to molds that actually have the cavities therein. Thus, it is contemplated that a mold base or frame may be sold with a monitor or counter therein prior to an actual cavity being formed.

From the foregoing, it is seen that there is provided a device which serves as a monitor and/or counter for an ejection mold which is relatively inexpensive and yet generates very accurate data, which shows the extent and usage of the mold for particular parts. Preferably, the monitor is more sophisticated than a simple counter and records therein mold identification information, part identification information, average cycle time information as well as actual dates and quantities of parts molded over particular times. The invention is particularly useful in that accurate information is retained about the usage of the mold and timely, proper maintenance can be more readily facilitated.

## Claims

1. A mold for releasably mounting in a plastic molding press and having a cavity therein for molding a part, the mold comprising a mold body (10) having a first and second portion for molding a part with the portion being movable between open and closed positions, and comprising an electric mold cycle monitor device (35, 35a) with an actuator (36) operable by the press or mold during each molding cycle to activate the mold cycle monitor device (35, 35a), said mold cycle monitor device (35, 35a) including a housing (45),
**characterized in that**
said electric mold cycle monitor device (35, 35a) is received in a pocket (48) formed in the mold for movement with the mold to and from the press, said mold cycle monitor device (35, 35a) having a counter display (38, 38a) for displaying a mold cycle count, said count being visible from the exterior of the mold when the mold cycle monitor device (35, 35a) is mounted in the pocket (48).

2. A mold in accordance with claim 1 **characterized by**
the actuator (36) on said electric mold cycle monitor device (35, 35a) being operably connected to a switch (60) such that when the actuator (36) is engaged bythe press or mold the switch (60) is closed to cause operation of the electric mold cycle monitor device (35, 35a) to register one stroke count.

3. A mold in accordance with claim 1 **characterized by**
said electric mold cycle monitor device (35, 35a) including an electric battery (39) for retaining the cycle and other information.

4. A mold in accordance with claim 1 **characterized by**
said electric mold cycle monitor device (35, 35a) having a maintenance switch (42) settable to indicate when the mold should receive maintenance.

5. A mold in accordance with claim 4
including an alarm means (44a) operable by the maintenance switch (42) to signal that it is time to do preventive maintenance.

6. A mold in accordance with claim 1 **characterized by**
a clock (64) to record dates and time of usage of the mold.

7. A mold in accordance with claim 1 **characterized by**
means (75) being provided for computing the average cycle time for molding a part.

8. A mold in accordance with claim 1 **characterized by**
a memory device (65) for storing the identity of the part being molded.

9. A mold in accordance with claim 1 **characterized by**
ports (70) being provided on the mold for connection to a readout device to obtain readouts of data from said electric mold cycle monitor device (35, 35a).

10. A mold in accordance with claim 9 **characterized by**
recording means for recording the name of the part, a part identification and a mold identification which can be read out from the port (70).

11. A mold in accordance with claim 1 **characterized by**
an identification plate (80) attached to a face of the said electric mold cycle monitor device (35, 35a) to identify the part and the mold.

12. A mold in accordance with claim 1 **characterized by** an output means for operably associating a hand held read out device with said electric mold cycle monitor device (35, 35a).

13. A mold in accordance with claim 1 **characterized by** including an input device operably associated with said electric mold cycle monitor device (35, 35a) to input information and control said electric mold cycle monitor device (35, 35a).

14. A mold in accordance with claim 1 **characterized by** said electric mold cycle monitor device (35, 35a) being programmable to subtract each mold cycle recorded from a settable countdown number.

15. A mold in accordance with claim 1 **characterized by** said electric mold cycle monitor device (35, 35a) being programmable to record each mold cycle for a batch or run of a particular part.

16. A mold in accordance with claim 1 **characterized by** said electric mold cycle monitor device (35, 35a) being operably associated with an input device for inputting information into a memory (65) for causing said electric mold cycle monitor device (35, 35a) to subtract each mold cycle recorded from a settable countdown number or interval, to sum each mold cycle for a batch or run of a part, and to sum each mold cycle during multiple runs or batches of the same part or different parts.

17. A mold in accordance with claim 16 **characterized by** the input device for inputting information into a memory (65) for causing said electric mold cycle monitor device (35, 35a) to subtract each mold cycle recorded from a settable countdown number for monitoring the service interval of the mold.

18. A mold in accordance with claim 1 **characterized in that** the housing (45) is a tough, closed body for substantially enclosing and protecting the internal electronics and devices.

## Patentansprüche

1. Form zum freigebbaren Befestigen in einer Kunststoffformpresse mit einem Hohlraum darin zum Formen eines Teils, wobei die Form einen Formkörper (10) mit einem ersten und einem zweiten Abschnitt zum Formen eines Teils umfasst, wobei der Abschnitt zwischen offenen und geschlossenen Positionen bewegbar ist, und mit einer elektrischen Formzyklusüberwachungsvorrichtung (35, 35a) mit einem Aktuator (36), der durch die Presse oder die Form während jedes Formzyklus betätigbar ist, um die Formzyklusüberwachungsvorrichtung (35, 35a) zu aktivieren, wobei die Formzyklusüberwachungsvorrichtung (35, 35a) ein Gehäuse (45) umfasst,
**dadurch gekennzeichnet, dass** die elektrische Formzyklusüberwachungsvorrichtung (35, 35a) in einer in der Form ausgebildeten Tasche (48) zur Bewegung mit der Form zu und von der Presse aufgenommen ist, wobei die Formzyklusüberwachungsvorrichtung (35, 35a) eine Zähleranzeige (38, 38a) zur Anzeige einer Formzykluszählung aufweist, wobei die Zählung von außerhalb der Form einsehbar ist, wenn die Formzyklusüberwachungsvorrichtung (35, 35a) in der Tasche (48) befestigt ist.

2. Form nach Anspruch 1, **dadurch gekennzeichnet, dass** der Aktuator (36) an der elektrischen Formzyklusüberwachungsvorrichtung (35, 35a) funktionell mit einem Schalter (60) verbunden ist, so dass, wenn der Aktuator (36) mit der Presse oder der Form in Eingriff kommt, der Schalter (60) geschlossen wird, um zu bewirken, dass die elektrische Formzyklusüberwachungsvorrichtung (35, 35a) in Betrieb gesetzt wird und eine Zählung eines Hubs registriert.

3. Form nach Anspruch 1, **dadurch gekennzeichnet, dass** die elektrische Formzyklusüberwachungsvorrichtung (35, 35a) eine elektrische Batterie (39) zum Halten des Zyklus und anderer Informationen umfasst.

4. Form nach Anspruch 1, **dadurch gekennzeichnet, dass** die elektrische Formzyklusüberwachungsvorrichtung (35, 35a) einen Wartungsschalter (42) aufweist, der so einstellbar ist, dass er angibt, wann die Form gewartet werden soll.

5. Form nach Anspruch 4, mit einem Alarmmittel (44a), das durch den Wartungsschalter (42) betätigbar ist, um zu signalisieren, dass die Zeit gekommen ist, um eine vorbeugende Wartung durchzuführen.

6. Form nach Anspruch 1, **gekennzeichnet durch** eine Uhr (64), um Daten und Zeit des Gebrauchs der Form aufzuzeichnen.

7. Form nach Anspruch 1, **gekennzeichnet durch** ein Mittel (75), das zum Berechnen der durchschnittlichen Zykluszeit zum Formen eines Teils vorgesehen ist.

8. Form nach Anspruch 1, **gekennzeichnet durch** eine Speichervorrichtung (65) zum Speichern der Identität des zu formenden Teiles.

9. Form nach Anspruch 1, **gekennzeichnet durch** Anschlüsse (70), die an der Form zur Verbindung mit einer Auslesevorrichtung vorgesehen sind, um Datenauslesungen von der elektrischen Formzyklusüberwachungsvorrichtung (35, 35a) zu erhalten.

10. Form nach Anspruch 9, **gekennzeichnet durch** ein Aufzeichnungsmittel zum Aufzeichnen des Namens des Teiles, einer Teilekennzeichnung wie auch einer Formkennzeichnung, die von dem Anschluss (70) abgelesen werden können.

11. Form nach Anspruch 1, **dadurch gekennzeichnet, dass** eine Identifikations- bzw. Kennzeichnungsplatte (80) an einer Seite der elektrischen Formzyklusüberwachungsvorrichtung (35, 35a) befestigt ist, um das Teil und die Form identifizieren zu können.

12. Form nach Anspruch 1, **gekennzeichnet durch** ein Ausgabemittel, um eine Hand-Auslesevorrichtung mit der elektrischen Formzyklusüberwachungsvorrichtung (35, 35a) funktionell in Verbindung zu bringen.

13. Form nach Anspruch 1, **dadurch gekennzeichnet, dass** eine Eingabevorrichtung vorgesehen ist, die mit der elektrischen Formzyklusüberwachungsvorrichtung (35, 35a) funktionell in Verbindung steht, um Information einzugeben und die elektrische Formzyklusüberwachungsvorrichtung (35, 35a) zu steuern.

14. Form nach Anspruch 1, **dadurch gekennzeichnet, dass** die elektrische Formzyklusüberwachungsvorrichtung (35, 35a) so programmierbar ist, dass jeder aufgezeichnete Formzyklus von einer einstellbaren, rückwärts zählbaren Zahl subtrahiert wird.

15. Form nach Anspruch 1, **dadurch gekennzeichnet, dass** die elektrische Formzyklusüberwachungsvorrichtung (35, 35a) so programmierbar ist, dass jeder Formzyklus für eine Charge oder einen Durchlauf eines bestimmten Teiles aufgezeichnet wird.

16. Form nach Anspruch 1, **dadurch gekennzeichnet, dass** die elektrische Formzyklusüberwachungsvorrichtung (35, 35a) mit einer Eingabevorrichtung zum Eingeben von Information in einen Speicher (65) funktionell in Verbindung steht, um damit zu bewirken, dass die elektrische Formzyklusüberwachungsvorrichtung (35, 35a) jeden aufgezeichneten Formzyklus von einer einstellbaren, rückwärts zählbaren Zahl oder einem einstellbaren, rückwärts zählbaren Intervall subtrahiert, jeden Formzyklus für eine Charge oder einen Durchlauf eines Teils summiert und jeden Formzyklus während mehrerer Durchläufe oder Chargen desselben Teils oder verschiedener Teile summiert.

17. Form nach Anspruch 16, **dadurch gekennzeichnet, dass** die Eingabevorrichtung zum Eingeben von Information in einen Speicher (65) bewirkt, dass die elektrische Formzyklusüberwachungsvorrichtung (35, 35a) jeden aufgezeichneten Formzyklus von einer einstellbaren, rückwärts zählbaren Zahl subtrahiert, um das Service- bzw. Wartungsintervall der Form zu überwachen.

18. Form nach Anspruch 1, **dadurch gekennzeichnet, dass** das Gehäuse (45) ein fester, geschlossener Körper ist, der die interne Elektronik und die internen Vorrichtungen im Wesentlichen umschließt und schützt.

## Revendications

1. Moule destiné à être monté de façon amovible dans une presse de moulage de matière plastique et contenant une cavité pour mouler une pièce, le moule comportant un corps de moule (10) possédant des première et seconde parties pour mouler une pièce, la partie étant déplaçable entre des positions ouverte et fermée, et comprenant un dispositif électrique (35, 35a) de contrôle du cycle de moulage possédant un actionneur (36) pouvant être actionné par la presse ou le moule pendant chaque de moulage pour activer le dispositif (35, 35a) de contrôle du cycle de moulage, ledit dispositif (35, 35a) de contrôle du cycle de moulage comprenant un boîtier (45),
**caractérisé en ce que**
ledit dispositif électrique (35, 35a) de contrôle du cycle de moulage est logé dans un logement (48) formé dans le moule pour se déplacer avec le moule en direction et à partir de la presse, ledit dispositif (35, 35a) de contrôle du cycle de moulage possédant un dispositif d'affichage à compteur (38, 38a) pour afficher un nombre de cycles de moulage, le nombre étant visible de l'extérieur du moule lorsque le dispositif (35, 35a) de contrôle du cycle de moulage est monté dans le logement (48).

2. Moule selon la revendication 1, **caractérisé en ce que** l'actionneur (36) situé sur ledit dispositif électrique (35, 35a) de contrôle du cycle de moulage est connecté de façon opérationnelle à un interrupteur (60) de telle sorte que, lorsque la presse ou le moule est en contact avec l'actionneur (36), l'interrupteur (60) est fermé de manière à provoquer le fonctionnement du dispositif électrique (35, 35a) de contrôle du cycle de moulage pour enregistrer un nombre de course.

3. Moule selon la revendication 1, **caractérisé en ce que** ledit dispositif électrique (35, 35a) de contrôle du cycle de moulage comprend une batterie électrique (39) servant à retenir le cycle et d'autres informations.

4. Moule selon la revendication 1, **caractérisé en ce que** ledit dispositif électrique (35, 35a) de contrôle du cycle de moulage comporte un interrupteur de maintenance (42) pouvant être positionné de manière à indiquer le moment où une maintenance doit être appliquée au moule.

5. Moule selon la revendication 4, comprenant des moyens d'alarme (44a) pouvant être actionnés par l'interrupteur de maintenance (42) pour signaler que c'est le moment d'effectuer une maintenance préventive.

6. Moule selon la revendication 1, **caractérisé par** une horloge (64) pour enregistrer des dates et des durées d'utilisation du moule.

7. Moule selon la revendication 1, **caractérisé par** des moyens (75) prévus pour calculer la durée de cycle moyenne pour mouler une pièce.

8. Moule selon la revendication 1, **caractérisé par** un dispositif de mémoire (65) pour mémoriser l'identité de la pièce moulée.

9. Moule selon la revendication 1, **caractérisé par** des orifices (70) prévus dans le moule pour le raccordement à un dispositif de lecture pour obtenir des indications de données fournies par le dispositif électrique (35, 35a) de contrôle du cycle de moulage.

10. Moule selon la revendication 9, **caractérisé par** des moyens d'enregistrement pour enregistrer le nom de la pièce, une identification de pièce et une identification de moule, qui peuvent être lus à partir de l'orifice (70).

11. Moule selon la revendication 1, **caractérisé par** une plaque d'identification (80) fixée à une face dudit dispositif électrique (35, 35a) de contrôle du cycle de moulage pour identifier la pièce et le moule.

12. Moule selon la revendication 1, **caractérisé par** des moyens de sortie pour associer de façon opérationnelle un dispositif de lecture tenu à la main audit dispositif électrique (35, 35a) de contrôle du cycle de moulage.

13. Moule selon la revendication 1, **caractérisé en ce qu'**il comprend un dispositif d'entrée associé de façon opérationnelle audit dispositif électrique (35, 35a) de contrôle du cycle de moulage pour introduire des informations et commander ledit dispositif électrique (35, 35a) de contrôle du cycle de moulage.

14. Moule selon la revendication 1, **caractérisé en ce que** ledit dispositif électrique (35, 35a) de contrôle du cycle de moulage est programmable pour soustraire chaque cycle de moulage enregistré d'un nombre de comptage régressif réglable.

15. Moule selon la revendication 1, **caractérisé en ce que** ledit dispositif électrique (35, 35a) de contrôle du cycle de moulage est programmable pour enregistrer chaque cycle de moulage pour un lot ou le passage d'une pièce particulière.

16. Moule selon la revendication 1, **caractérisé en ce que** ledit dispositif électrique (35, 35a) de contrôle du cycle de moulage est associé de façon opérationnelle à un dispositif d'entrée pour introduire des informations dans une mémoire (65) pour amener ledit dispositif électrique (35, 35a) de contrôle du cycle de moulage à soustraire chaque cycle de moulage enregistré d'un nombre ou d'un intervalle de comptage régressif réglable, pour additionner tous les cycles de moulage pour un lot ou un passage d'une pièce et pour additionner tous les cycles de moulage pendant des passages ou des lots multiples de la même pièce ou de pièces différentes.

17. Moule selon la revendication 16, **caractérisé en ce que** le dispositif d'entrée servant à introduire des informations dans une mémoire (65) pour amener ledit dispositif électrique (35, 35a) de contrôle du cycle de moulage à soustraire chaque cycle de moulage enregistré, à partir d'un nombre de comptage régressif réglable pour le contrôle de l'intervalle de service du moule.

18. Moule selon la revendication 1, **caractérisé en ce que** le boîtier (45) est un boîtier fermé rigide servant à enfermer sensiblement et protéger les systèmes électroniques et dispositifs internes.
